Europäisches Patentamt

European Patent Office

Office européen des brevets

(19)

(11) Veröffentlichungsnummer: **0 264 531**
**B1**

(12) **EUROPÄISCHE PATENTSCHRIFT**

(45) Veröffentlichungstag der Patentschrift: **09.01.91**

(21) Anmeldenummer: **87106341.8**

(22) Anmeldetag: **02.05.87**

(60) Teilanmeldung 90108039.0 eingereicht am 02/05/87.

(51) Int. Cl.⁵: **B 01 D 46/10,** B 05 B 15/12

(54) Filterelement für eine Filterdecke einer Lackspritzanlagenkabine.

(30) Priorität: **23.10.86 DE 3635988**

(43) Veröffentlichungstag der Anmeldung:
**27.04.88 Patentblatt 88/17**

(45) Bekanntmachung des Hinweises auf die
Patenterteilung:
**09.01.91 Patentblatt 91/02**

(84) Benannte Vertragsstaaten:
**DE ES IT**

(56) Entgegenhaltungen:
**DE-A-1 507 826**
**DE-A-1 607 667**
**DE-A-2 449 065**
**GB-A-1 331 274**
**US-A-2 685 923**

(73) Patentinhaber: **Dürr GmbH**
**Spitalwaldstrasse 18**
**D-7000 Stuttgart 40 (DE)**

(72) Erfinder: **Küchenthal, Gunther**
**Glemsstrasse 12**
**D-7140 Ludwigsburg (DE)**
Erfinder: **Röckle, Bernhard**
**Im Brühl 53**
**D-7250 Leonberg-Eltingen (DE)**

(74) Vertreter: **Hoeger, Stellrecht & Partner**
**Uhlandstrasse 14 c**
**D-7000 Stuttgart 1 (DE)**

Courier Press, Leamington Spa, England.

**Beschreibung**

Die Erfindung betrifft ein Filterelement für eine Filterdecke einer Lackspritzanlagenkabine, welches einen rechteckigen Metallprofilrahmen aufweist, dessen eine Durchlassöffnung definierende Rahmenschenkel in das Rahmeninnere hinein vorspringende, ungefähr horizontale Auflageflansche besitzen, auf denen ein rechteckiges Gitter aufliegt, das eine sich ebenso wie das Gitter über die Durchlassöffnung erstreckende Filtermatte trägt, die durch an den Rahmenschenkeln um horizontale Achsen schwenkbar angebrachte und auf die Filtermatte herabschwenkbare Klemmschienen niedergehalten und im Rahmen eingespannt wird.

Die Decke des eigentlichen Kabinenraums einer Lackspritzanlagenkabine ist üblicherweise über ihre ganze Breite als sogenannte Filterdecke ausgeführt. Sie besteht in der Regel aus rechteckigen Filterelementen, deren Umfang von einem Rahmen gebildet wird, und die Rahmen einander benachbarter Filterelemente sind mittels Schraubverbindungen aneinander befestigt. Die Länge dieser rechteckigen Filterelemente entspricht meist ungefähr der Kabinenbreite, die z.B. 6 m betragen kann, während die sich in Kabinenlängsrichtung erstreckende Breite der Filterelemente z.B. 1 m beträgt.

Beispielsweise aus von der Anmelderin erstellten Lackspritzanlagen sind Filterelemente der eingangs erwähnten Art bekannt, deren Rahmen von verzinkten Stahlprofilen gebildet werden, die einen ungefähr C-förmigen Querschnitt besitzen, wobei sich das C dem Rahmeninnern zu öffnet und einen im Vergleich zu seinem oberen Schenkel ungefähr doppelt bis dreifach so breiten unteren Schenkel besitzt, der den das Gitter und die Filtermatte tragenden Flansch bildet. Bei dem Gitter handelt es sich um ein verzinktes Stahldrahtgitter, dessen Randbereiche auf die erwähnten Flansche der Rahmenschenkel aufgeschweisst sind. Auf die Innenseite des vertikal verlaufenden Rückens eines jeden Rahmenschenkels ist eine im Querschnitt umgekehrt L-förmige Tragwinkelschiene aufgeschweisst, an deren dem Rahmeninnern zugewandte freie Längskante eine Klemmschiene so angelenkt ist, dass sie sich um eine horizontale, in Längsrichtung des betreffenden Rahmenschenkels verlaufende Achse schwenken lässt. Bei dieser Klemmschiene handelt es sich gleichfalls um eine Stahlwinkelschiene mit ungekehrt L-förmigem Querschnitt, die im heruntergeschwenkten Zustand mit der Tragwinkelschiene einen im Querschnitt umgekehrt U-förmigen Kanal bildet und infolge ihres Eigengewichts die Filtermatte zwischen sich und dem erwähnten Flansch des betreffenden Rahmenschenkels einklemmt. Um die Klemmschiene hochschwenken zu können, ist auf ihre dem Rahmeninnern zugekehrte Seite ein bügelförmiger Griff aufgeschweisst, der bei hochgeschwenkter Klemmschiene gegen den vertikalen Rücken des Rahmenschenkels so anliegt, dass der Klemmschienenschwerpunkt in Richtung auf das Rahmeninnere neben der Klemmschienenschwenkachse liegt. Deshalb müssen Sicherungsriegel vorgesehen werden, um bei einem Filtermattenwechsel ein unbeabsichtigtes Herabfallen der Klemmschienen zu verhindern.

Neben dem hohen Gewicht dieser bekannten Filterelemente, welches deren Montage erschwert, und dem durch die schweren Klemmschienen bedingten Unfallrisiko stört bei den bekannten Filterelementen vor allem der Umstand, daß die Filtermatte an den Kanten des Stahldrahtgitters durch freie Drahtenden, Kanten und Grate beschädigt werden kann; an diesen Stellen kann sich bei einem Filtermattenwechsel aber auch der Monteur verletzen. Wird das Stahldrahtgitter stumpf in den Metallprofilrahmen eingeschweißt, so reduziert man zwar das Verletzungsrisiko, jedoch führt dies zu einer beträchtlichen Erhöhung des Fertigungsaufwands und damit zu einer beträchtlichen Kostensteigerung.

Der Erfindung lag die Aufgabe zugrunde, ein leichtes und einfach herzustellendes Filterelement zu schaffen, in dem sich das die Filtermatte tragende Gitter einfach befestigen läßt.

Ausgehend von einem Filterelement der eingangs erwähnten Art läßt sich diese Aufgabe erfindungsgemäß dadurch lösen, daß die Rahmenschenkel von stranggepreßten Profilschienen aus Aluminium oder einer anderen Leichtmetallegierung gebildet werden, die Aussparungen aufweisen, in denen sich mit einem Gewinde versehene Halteelemente anbringen lassen, und daß von den Halteelementen niedergehaltene Spannelemente zum Einspannen des Gitters zwischen diesen und den Flanschen vorgesehen sind.

Beim Werkstoff für die Rahmenschenkel wird es sich zweckmässigerweise um eine der üblichen Aluminiumlegierungen handeln, natürlich kommen aber auch andere Leichtmetallegierungen in Frage, die sich strangpressen lassen. Bei den in den Rahmenschenkeln vorgesehenen Aussparungen kann es sich um eingezogene T-Nuten handeln, in die mit Gewindebolzen versehene Nutensteine eingesetzt werden; diese Gewindebolzen können dann durch Öffnungen des Gitters hindurchragen, so dass sich mit Unterlegscheiben und Muttern das Gitter an den Rahmenschenkeln befestigen lässt. In die Rahmenschenkel könnten desweiteren Nuten eingezogen sein, in die vor der Befestigung des Gitters dessen Kanten eingeschoben werden, so dass von ihnen kein Verletzungsrisiko mehr ausgehen kann. Einfacher ist es jedoch, wenn als Spannelemente von den Halteelementen niedergehaltene sich längs der Rahmenschenkel erstreckende Spannleisten verwendet werden, die die Ränder bzw. die Kanten des Gitters abdecken. Der Verrigerung des Herstellungsaufwands dient es auch, wenn als Halteelemente insbesondere selbstschneidende Schrauben verwendet werden, was bei einer Aluminiumprofilschiene ohne weiteres möglich ist, und bei einer bevorzugten Ausführungsform werden in die Rahmenschenkel als Aussparungen für die Halteelemente Längsnuten eingezogen, in die sich die Schrauben oder dergleichen einfach eindrehen lassen.

Durch Verwendung stranggepresster Aluminiumprofilschienen für die Rahmenschenkel wird das Gewicht des Filterelements drastisch reduziert und es werden einfache Befestigungsmöglichkeiten für der Befestigung des Gitters und der Klemmschienen sowie der Montage der Metallprofilrahmen aneinander sowie an anderen Teilen dienende Elemente eröffnet, vor allem dadurch, dass beim Strangpressen in die Aluminiumprofilschienen Nuten für Gewindebolzen tragende Nutensteine und selbstschneidende Schrauben eingezogen werden. Dies gilt vor allem für die Befestigung von Schwenklagern für die Klemmschienen, so dass bei einer bevorzugten Ausführungsform jeder Rahmenschenkel eine sich dem Nutgrund zu erweiternde, eingezogene Längsnut zum Halten von Nutensteinen aufweist, an denen Träger für die an den letzteren angelenkten, gleichfalls als stranggepresste Aluminiumprofilschienen ausgebildeten Klemmschienen befestigt sind. Auf diese Weise erübrigt sich nicht nur das Anschweissen von Tragwinkelschienen, wie dies bei dem geschilderten bekannten Filterelement der Fall ist, sondern durch die Verwendung stranggepresster Aluminiumprofilschienen für die Klemmschienen wird das Gewicht des Filterelements weiter reduziert, und den stranggepressten Klemmschienen lässt sich ohne Erhöhung der Herstellungskosten nahezu jedes beliebige Profil geben, weshalb empfohlen wird, den Klemmschienen in ihrem gegen die Filtermatte anliegenden Bereich einen Querschnitt zu geben, der einem abgerundeten, dem Rahmeninnern zu offenen Haken gleicht, um so das Verletzungsrisiko beim Auswechseln der Filtermatte drastisch zu verringern, weil anstelle einer verhältnismässig schmalen Kante an der schweren Stahlwinkelschiene des bekannten Filterelements ein stark abgerundeter unterer Bereich einer leichten Aluminiumklemmschiene des erfindungsgemässen Filterelements tritt. Hinzu kommt, dass sich die Griffe, wie sie an den Klemmschienen des bekannten Filterelements vorhanden sind, einsparen lassen, da die erfindungsgemässen Aluminium klemmschienen vom Rahmeninnern her erfassbare Griffmulden bilden.

Gerade weil man aus dem geschilderten Grund in der Querschnittsgestaltung der stranggepressten Klemmschienen verhältnismässig frei ist, können diese so ausgebildet werden, dass die Schwenkachse der Klemmschienen einen solchen Querabstand von dem betreffenden Rahmenschenkel aufweist, dass der Schwerpunkt der hochgeschwenkten, gegen den zugehörigen Rahmenschenkel anliegenden Klemmschiene - in der Draufsicht - zwischen der Schwenkachse und dem Rahmenschenkel liegt, so dass die im Zusammenhang mit der Schilderung des bekannten Filterelements beschriebenen Sicherungsriegel für die Klemmschienen entfallen können, was zu einer weiteren Kosteneinsparung führt.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung mehrerer bevorzugter Ausführungsformen des erfindungsgemässen Filterelements;

in der Zeichnung zeigen:

Fig. 1: einen Vertikalschnitt durch eine Spritzkabine senkrecht zur Längsrichtung einer Lackspritzanlage zur Erläuterung der Anordnung einer Filterdecke;

Fig. 2: einen Längsschnitt durch die Spritzkabine entsprechend der Linie 2-2 in Fig. 1;

Fig. 3: den Ausschnitt "A" aus Fig 2 in grösserem Maßstab als in dieser Figur, u.z. zur Darstellung einer ersten besonders vorteilhaften Ausführungsform des erfindungsgemässen Filterelements.

Fig. 4: eine der Fig. 3 entsprechende Darstellung einer zweiten Ausführungsform des erfindungsgemässen Filterelements;

Fig. 5: eine jeweils einer Hälfte der Figuren 3 und 4 entsprechende Darstellung einer dritten bevorzugten Ausführungsform des erfindungsgemässen Filterelements, und

Fig. 6: eine der Figur 4 entsprechende Darstellung einer vierten, besonders vorteilhaften Ausführungsform.

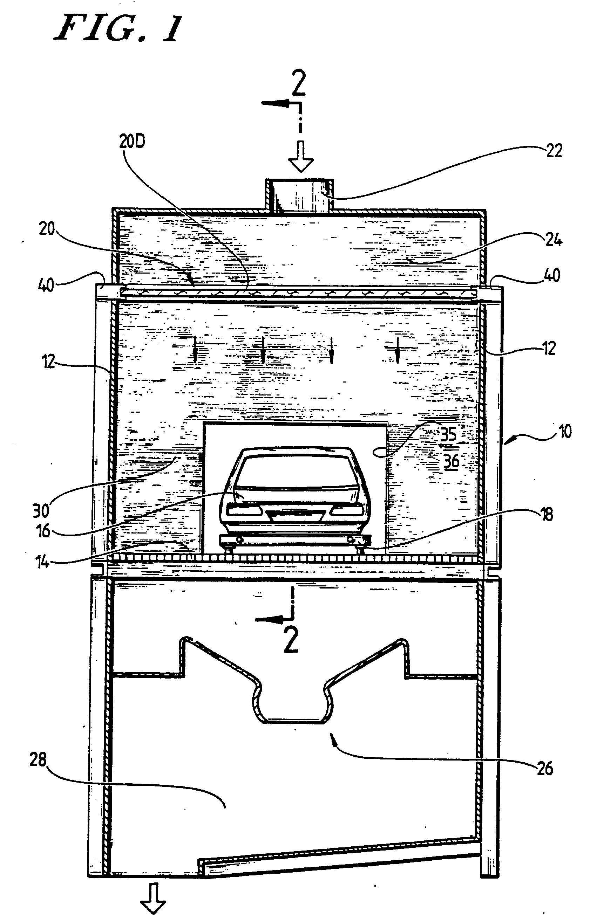

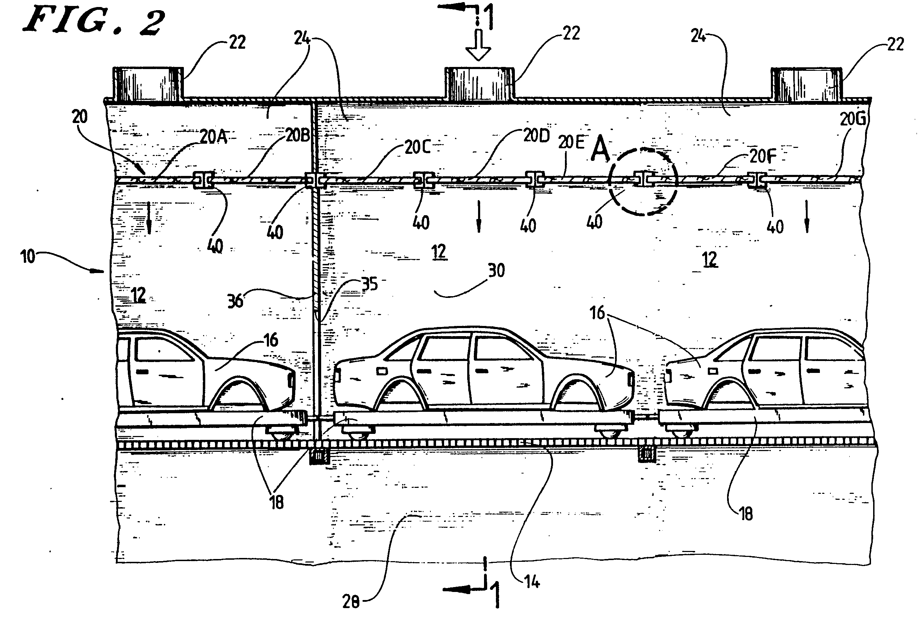

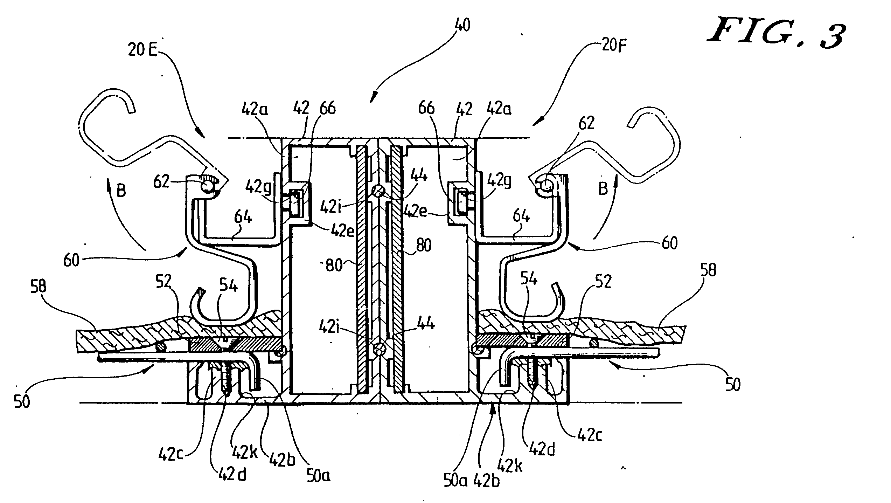

Die Figuren 1 und 2 zeigen eine als Ganzes mit 10 bezeichnete Spritzkabine mit Seitenwänden 12, einem Gitterrostboden 14, über den in Längsrichtung der Lackspritzanlage Fahrzeugkarosserien 16 auf Schienen-geführten Schlitten 18 transportiert werden, einer Filterdecke 20, welche eine mit Lufteinlassöffnungen 22 versehene Zuluftkammer 24 nach unten begrenzt, einer als Ganzes mit 26 bezeichneten Abluft-Waschvorrichtung und einer Abluftkammer 28. Über die Filterdecke 20 wird der Arbeitsraum 30 der Spritzkabine 10 gleichmässig mit den Arbeitsraum von oben nach unten durchströmender Luft beschickt.

Zwischen einzelnen Abschnitten der Spritzkabine 10 befinden sich Zwischenwände 36, die mit Durchlassöffnungen 35 für die Karosserien 16 versehen sind.

Wie die Figur 2 erkennen läßt, ist die Filterdecke 20 aus in Längsrichtung der Spritzkabine hintereinander angeordneten selbsttragenden Filterelementen 20A, 20B.....20G etc. zusammengesetzt, die sich jeweils über die ganze Breite der Spritzkabine 10 erstrecken und in Längsrichtung der Spritzkabine stumpf aneinanderstoßen, wobei sie in noch näher zu beschreibender Weise miteinander verschraubt sind.

Die Strömungsrichtung der Luft durch die Spritzkabine 10 hindurch wurde in den Figuren 1 und 2 durch Pfeile angedeutet.

Insoweit entspricht die Spritzkabine dem Stand der Technik.

Im folgenden soll nun die in Figur 3 gezeigte erste Ausführungsform des in den Figuren 1 und 2 mit 40 bezeichneten Metallprofilrahmens näher erläutert werden.

Dieser ist aus vier rechtwinklig gegeneinander stoßenden Rahmenschenkeln 42 zusammengesetzt, die durch Ablängen einer stranggepreßten Aluminiumprofilschiene gewonnen werden. Diese Profilschiene besitzt erfindungsgemäß ein kastenförmiges Hohlprofil 42a mit einem angeformten unteren Tragflansch 42b. Letzterer hat vorteilhafterweise ein ungefähr W-förmiges Profil mit einer in einen Mittelsteg 42c eingezogenen Längsnut 42d. Ferner ist in die Aluminiumprofilschiene unter Bildung eines inneren Stegs 42e eine T-Nut 42g eingezogen. Schließlich sind in die die Rahmenaußenseite bildende Fläche der Aluminiumprofilschiene zwei im Querschnitt halbkreisförmige Längsnuten 42i eingezogen, um zwischen gegeneinander anliegende Rahmenschenkel 42 einander benachbarter Filterelemente 20E und 20F Dichtungsschnüre 44 einlegen zu können.

Erfindungsgemäß können einander benachbarte Filterelemente über eine quer verlaufende Verbindungsschiene und Schrauben aneinander befestigt werden, die in die Längsnut, welche in die Aluminiumprofilschiene eingezogen ist, eingeschraubt werden und zweckmäßigerweise als selbstschneidende Schrauben ausgebildet sind.

Ein verzinktes Stahldrahtgitter 50 wird auf die Tragflansche 42b der vier Rahmenschenkel 42 eines Metallprofilrahmens 40 aufgelegt, wobei es sich empfiehlt, die Randbereiche 50a des Gitters 50 nach unten umzubiegen und in eine nach oben offene Nut 42k einzusetzen, die vom jeweiligen Tragflansch 42 b gebildet wird. Dann werden auf die Ränder des Gitters 50 vier Spannleisten 52 aufgelegt und mit Schrauben 54 befestigt, bei denen es sich gleichfalls um selbstschneidende Schrauben handelt, die einfach in die Längsnuten 42d eingedreht werden können; auf diese Weise läßt sich das Stahldrahtgitter 50 zwischen den vier Tragflanschen 42b und den vier Spannleisten 52 festklemmen. Nachdem bei der in Figur 3 gezeigten Ausführungsform die Randbereiche 50a des Gitters 50 von den Nuten 42k der Rahmenschenkel 42 abschirmend aufgenommen werden, wäre es an sich nicht erforderlich, die Gitterränder mit den Spannleisten 52 abzudecken, so dass es bei dieser Ausführungsform auch möglich wäre, für die Schrauben 54 anstelle der Spannleisten 52 nur einfache Unterlegscheiben oder dergleichen vorzusehen, um das Gitter 50 sicher an den Tragflanschen 42b zu befestigen.

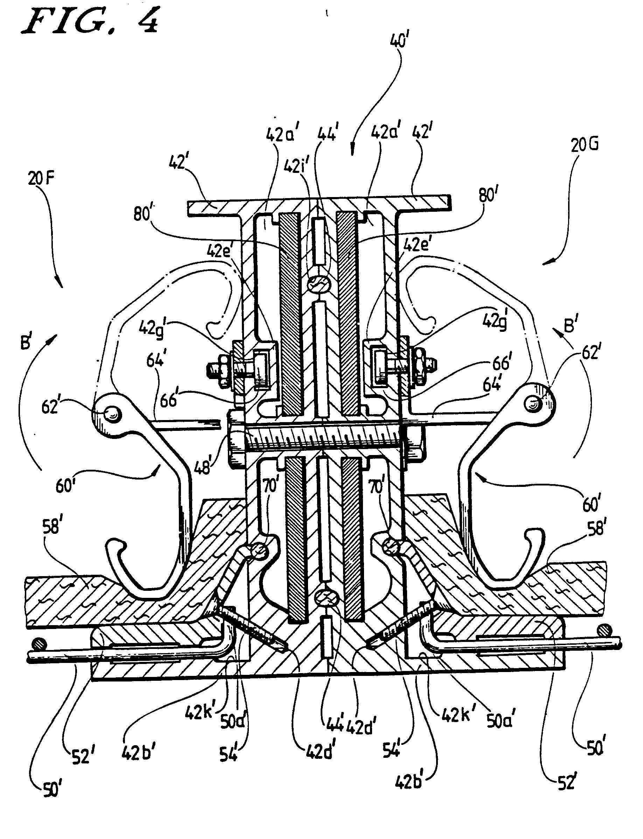

Schliesslich wird auf das Gitter 50 eine ggf. mehrteilige Filtermatte 58 aufgelegt, die sich erfindungsgemäss zumindest nahezu bis zur inneren Seitenwand des Hohlprofils 42a aller vier Rahmenschenkel 42 erstreckt und vorzugsweise an jeder Seite des Metallprofilrahmens 40 durch eine Klemmschiene 60 festgehalten wird, die erfindungsgemäss als stranggepresste Aluminiumprofilschiene ausgebildet ist und aus ihrer in Fig. 3 gezeigten wirksamen Position in Richtung des Pfeils B um ein Gelenk 62 hochgeschwenkt werden kann, um die Filtermatte 58 auszutauschen. Erfindungsgemäss hat die Klemmschiene 60 einen Querschnitt in Form eines stark gerundeten Hakens. Sie wird von einer im Querschnitt vorteilhafterweise U-förmigen Tragschiene 64 gehalten, an der das Gelenk 62 und Nutsteine 66 befestigt sind, welch letztere sich in die T-Nut 42g einschieben lassen, ehe man die Rahmenschenkel 42 zum Rahmen 40 zusammenfügt. Erfindungsgemäss ist nun die Klemmschiene 60 so gestaltet, dass ihr Schwerpunkt zwischen dem Gelenk 62 und dem Hohlprofil 42a liegt (in der Draufsicht gesehen), wenn die Klemmschiene nach dem Hochschwenken über ihre in Fig. 3 strichpunktiert dargestellte Stellung hinaus ihre unwirksame Stellung einnimmt (siehe Fig. 4 bis 6). Im heruntergeschwenkten Zustand klemmt sie jedoch die Filtermatte 58 zwischen sich und der betreffenden Spannleiste 52 ein.

Die in Fig. 4 dargestellte Ausführungsform soll nun nur insoweit beschrieben werden, als sie von der in Fig. 3 dargestellten ersten Ausführungsform abweicht, wobei für einander entsprechende Teile dieselben Bezugszeichen verwendet wurden, jedoch unter Hinzufügung eines Strichs bei den Elementen der Ausführungsform nach Fig. 4.

Bei dieser Ausführungsform hat die Spannleiste 52' erfindungsgemäss die Gestalt einer Winkelschiene, u.z. bildet ihr Querschnitt einen stumpfen Winkel. Sie stützt sich (ebenso wie bei der Ausführungsform nach Fig. 3) mit ihrer dem Hohlprofil 42a' zugewandten Längskante an einer Dichtungsschnur 70' ab, die in eine eingezogene Nut der Aluminiumprofilschiene eingelegt ist. Da die Spannleiste 52' auch bei dieser Ausführungsform jeweils einen Randbereich 50a' des Stahldrahtgitters 50' abdeckt, wurde der Randbereich 50a' bei dieser Ausführungsform nach oben umgebogen. Zur Befestigung gegeneinanderstossender Rahmenschenkel 42' einander benachbarter Metallprofilrahmen 40' aneinander dienen sich durch diese Rahmenschenkel hindurcherstreckende Gewindebolzen 48'.

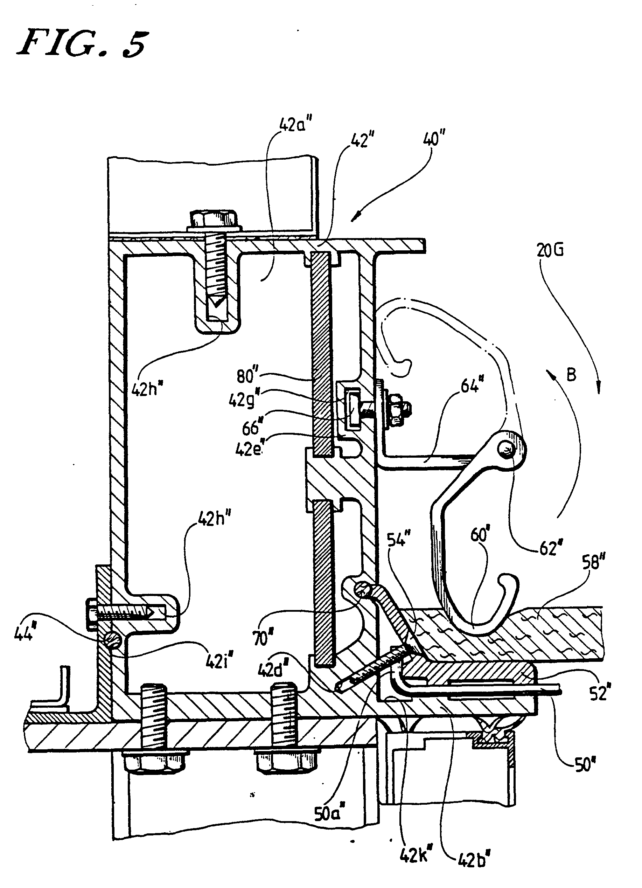

Auch die in Fig. 5 gezeigte dritte Ausführungsform bedarf nur noch insoweit einer Erläuterung, als darauf hinzuweisen ist, dass für die der Ausführungsform nach Fig. 3 entsprechenden Elemente dieselben Bezugszeichen wie in Fig. 3 verwendet worden sind, jedoch unter Hinzufügung zweier Striche. Die Fig. 5 lässt erkennen, dass in die die Rahmenschenkel 42″ bildenden Aluminiumprofilschienen Längsnuten 42h″ an nahezu beliebigen Stellen eingezogen werden können, wo sie für die Befestigung der Filterelemente an anderen Bauelementen der Spritzkabine zweckdienlich sind.

Schliesslich sei noch erwähnt, dass auf der Innenseite der Hohlprofile 42a bzw. 42a' bzw. 42a″ beim Strangpressen an die Hohlprofilwände beliebige Haltenuten angeformt werden können, die dem Halten von Aussteifungsleisten 80 bzw. 80' bzw. 80″ dienen bei den letzteren kann es sich um Stahlblechleisten handeln, die vor dem Zusammenfügen des Rahmens 40 bzw. 40' bzw. 40″ in die Rahmenschenkel 42 bzw. 42' bzw. 42″ eingeschoben werden.

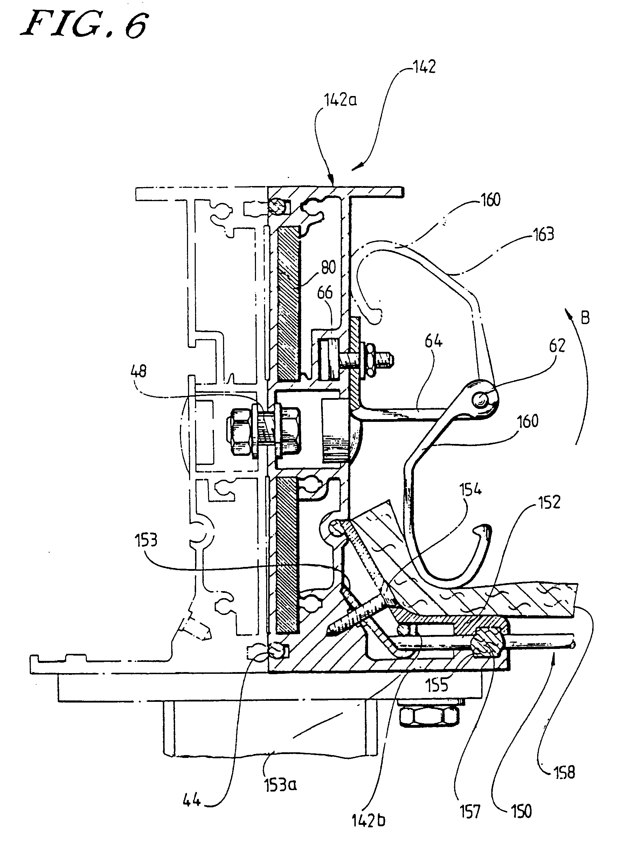

Die besonders vorteilhafte Ausführungsform nach Figur 6 wird ebenfalls nur insoweit beschrieben, als sie nach den vorstehenden Ausführungen erläuterungsbedürftig ist.

Bei dieser Ausführungsform wird das Stahldrahtgitter 150 nicht nur mittels einer Spannleiste 152 abgedeckt und niedergehalten, sondern eine am Rahmenschenkel 142 mit denselben Schrauben 154, die auch der Befestigung der Spannleiste 152 dienen, befestigte Spannlasche 153 dient dem Spannen der Ränder des Gitters nach aussen. Zu diesem Zweck hintergreift die Spannlasche 153 mit einem hakenförmig abgebogenen Rand 153a einen senkrecht zur Zeichnungsebene verlaufenden Draht des Gitters 150.

Die die Rahmenschenkel 142 bildenden Profilschienen bilden zusammen mit den Spannleisten 152 erfindungsgemäss einen Längskanal 155, in den eine elastische Dichtung 157 eingelegt ist, in die sich die Drähte des Gitters 150, welches den Kanal 155 durchquert, eindrücken lassen. Da die Dichtung 157 am inneren Rand des von dem Tragflansch 142b des Rahmenschenkels und der Spannleiste 152 gebildeten Spalts zur Aufnahme des Gitters 150 liegt, kann durch die Dichtung verhindert werden, daß in diesem Spalt sich sonst ansammelnder Staub in das Innere der Spritzkabine herabfällt.

Wie die strichpunktiert dargestellte obere Position der Klemmschiene 160 deutlich erkennen lässt, bildet deren Rücken eine Schrägfläche 163, die das Einlegen der Filtermatte 158 in den Rahmen erleichtert.

Von Vorteil ist es auch, daß die hochgeschwenkte Klemmschiene 160 unterhalb einer oberen Trittfläche 142a endet, die von den Rahmenschenkeln 142 gebildet wird, so daß ein Monteur, der die Filtermatte 158 auswechseln muss, die Rahmen vermittels der Trittflächen 142a bequem begehen kann.

Schliesslich bildet erfindungsgemäss auch bei dieser Ausführungsform die Spannleiste 152 einen Auflagewinkel für die Filtermatte 158.

Ein besonderer Vorteil der erfindungsgemässen Filterelemente ist darin zu sehen, dass der Befestigung der Stahldrahtgitter zwar Schrauben dienen, die jedoch nicht, u.z. auch nicht mit ihren Schraubenköpfen, ins Innere der Spritzkabine ragen.

## Patentansprüche

1. Filterelement (20A, 20G) für eine Filterdecke (20) einer Lackspritzanlagenkabine (10), welches einen rechteckigen Metallprofilrahmen (40; 40'; 40'') aufweist, dessen eine Durchlaßöffnung definierende Rahmenschenkel (42; 42'; 42''; 142) in das Rahmeninnere hinein vorspringende, ungefähr horizontale Auflageflansche (42b; 42b'; 42b''; 142b) besitzen, auf denen ein rechteckiges Gitter (50; 50'; 50''; 150) aufliegt, das eine sich ebenso wie das Gitter über die Durchlaßöffnung erstreckende Filtermatte (58; 58'; 58''; 158) trägt, die durch an den Rahmenschenkeln um horizontale Achsen (62; 62'; 62'') schwenkbar angebrachte und auf die Filtermatte herabschwenkbare Klemmschienen (60; 60'; 60''; 160) niedergehalten und im Rahmen eingespannt wird, dadurch gekennzeichnet, daß die Rahmenschenkel 42; 42'; 42'', 142) von stranggepreßten Profilschienen (42a, 42b; 42a', 42b'; 42a'',42b''; 142a, 142b) aus Aluminium oder einer anderen Leichtmetalllegierung gebildet werden, die Aussparungen (42d;

42d'; 42d'') aufweisen, in denen sich mit einem Gewinde versehene Halteelemente (54; 54'; 54''; 154) anbringen lassen, und daß von den Halteelementen niedergehaltene Spannelemente (52; 52'; 52''; 152) vorgesehen sind zum Einspannen des Gitters (50; 50'; 50''; 150) zwischen diesen Spannelementen und den Flanschen (42b; 42b'; 42b''; 142b).

2. Filterelement nach Anspruch 1, dadurch gekennzeichnet, daß die Spannelemente als von den Halteelementen (54; 54'; 54''; 154) niedergehaltene, sich längs der Rahmenschenkel (42; 42'; 42''; 142) erstreckende Spannleisten (52; 52'; 52''; 152) ausgebildet sind, welche die Ränder (50a; 50a'; 50a'') des Gitters (50; 50'; 50''; 150) abdecken.

3. Filterelement nach Anspruch 1 oder 2, dadurch gekennzeichnet, daß die Halteelemente insbesondere selbstschneidende Schrauben (54; 54'; 54''; 154) sind.

4. Filterelement nach einem oder mehreren der Ansprüche 1 bis 3, dadurch gekennzeichnet, daß jeder Rahmenschenkel (42; 42'; 42''; 142) eine die Aussparungen für die Halteelemente (54; 54'; 54''; 154) bildende eingezogene Längsnut (42d; 42d'; 42d'') aufweist.

5. Filterelement nach einem oder mehreren der Ansprüche 1 bis 4, dadurch gekennzeichnet, daß jeder Rahmenschenkel (42; 42'; 42''; 142) eine sich dem Nutgrund zu erweiternde, eingezogene Längsnut (42g; 42g'; 42g'') zum Halten von Nutensteinen (66; 66'; 66'') aufweist, an denen Träger (64; 64'; 64'') für die an den letzteren angelenkten, gleichfalls als stranggepreßte Aluminiumprofilschienen ausgebildeten Klemmschienen (60; 60'; 60''; 160) befestigt sind.

6. Filterelement nach Anspruch 5, dadurch gekennzeichnet, daß die Klemmschienen (60; 60'; 60''; 160) in ihrem gegen die Filtermatte (58; 58'; 58''; 158) anliegenden Bereich einen Querschnitt aufweisen, der einem abgerundeten, dem Rahmeninnern zu offenen Haken gleicht.

7. Filterelement nach Anspruch 5 oder 6, dadurch gekennzeichnet, daß die Schwenkachse (62; 62'; 62'') der Klemmschienen (60; 60'; 60''; 160) einen solchen Querabstand von dem betreffenden Rahmenschenkel (42; 42'; 42''; 142) aufweist, daß der Schwerpunkt der hochgeschwenkten, gegen den zugehörigen Rahmenschenkel anliegenden Klemmschiene in der Draufsicht zwischen der Schwenkachse und dem Rahmenschenkel liegt.

8. Filterelement nach einem oder mehreren der Ansprüche 2 bis 7, dadurch gekennzeichnet, daß die Filtermatte (58; 58'; 58''; 158) zwischen den Spannleisten (52; 52'; 52''; 152) und den Klemmschienen (60; 60'; 60''; 160) eingeklemmt ist.

9. Filterelement nach einem oder mehreren der vorstehenden Ansprüche, dadurch gekennzeichnet, daß die Klemmschienen (160) so dimensioniert und ihre Schwenkachsen (62) so angeordnet sind, daß die Rahmenschenkel (142) die hochgeschwenkten Klemmschienen nach oben überragen und oben eine Trittfläche (142a) zum Begehen des Rahmens (40) bilden.

10. Filterelement nach einem oder mehreren der vorstehenden Ansprüche, dadurch gekennzeichnet, daß die dem Rahmeninnern zugewandte Fläche (163) der hochgeschwenkten Klemmschiene (160) in Richtung nach unten und innen geneigt ist.

**Revendications**

1. Elément filtrant (20A-20G) pour un filtrant (20) d'une cabine (10) d'installation de laquage au pistolet, qui comporte un châssis rectangulaire (40; 40'; 40'') en profilés métalliques, dont des membrures de châssis (42; 42'; 42''; 142), définissant une ouverture de passage, comportent des rebords d'appui (42b; 42b'; 42b''; 142b) sensiblement horizontaux, faisant saillie à l'intérieur du châssis et sur lesquels repose une grille rectangulaire (50; 50'; 50''; 150), qui porte une nappe filtrante (58; 58'; 58''; 158) s'étendant, de même que la grille, au-dessus de l'ouverture de passage et qui est maintenue en position basse et enserre dans le châssis par des rails de fixation (60; 60'; 60''; 160), montés sur les membrures de châssis de façon à pouvoir pivoter autour d'axes horizontaux (62; 62'; 62'') et pouvant être rabattus sur la nappe de filtrage, caractérisé en ce que les membrures de châssis (42; 42'; 42''; 142) sont constituées par des rails profilés extrudés (42a, 42b; 42a', 42b'; 42a'', 42b''; 142a, 142b) en aluminium ou en un autre alliage de métal léger, qui comportent des évidements (42d; 42d'; 42d'') dans lesquels peuvent être engagés des éléments de retenue (54; 54'; 54''; 154) pourvus d'un filetage, et en ce qu'il est prévu des éléments de serrage (52; 52'; 52''; 152), maintenus en position basse par les éléments de retenue pour enserrer les grille (50; 50'; 50''; 150) entre ces éléments de serrage et les rebords (42b; 42b'; 42b''; 142b).

2. Elément filtrant selon la revendication 1, caractérisé en ce que les éléments de serrage sont agencés comme des barres de serrage (52; 52'; 52''; 152) s'étendant le long des membrures de châssis (42; 42'; 42''; 142) maintenues en position basse par les éléments de retenue (54; 54'; 54''; 154) et qui recouvrent les bords (50a; 50a'; 50a'') de la grille (50; 50'; 50''; 150).

3. Elément filtrant selon la revendication 1 ou 2,, caractérisé en ce que les éléments de retenue sont des vis, notamment auto-taraudantes (54; 54'; 54''; 154).

4. Elément filtrant selon une ou plusieurs des revendications 1 à 3, caractérisé en ce que chaque membrure de châssis (42; 42'; 42''; 142) comporte une rainure longitudinale dégagée (42d; 42d'; 42d'') formant les évidements pour les éléments de retenue (54; 54'; 54''; 154).

5. Elément filtrant selon une ou plusieurs des revendications 1 à 4, caractérisé en ce que chaque membrure de châssis (42; 42'; 42''; 142) comporte une rainure longitudinale dégagée (42g; 42g'; 42g''), s'élargissant vers le fond de rainure et servant à maintenir des coulisseaux (66; 66'; 66'') sur lesquels sont fixés des supports (64; 64'; 64'') pour les rails de fixation (60; 60'; 60''; 160) articulés sur ces derniers et agencés également comme des rails profilés extrudés en aluminium.

6. Elément filtrant selon la revendication 5, caractérisé en ce que les rails de fixation (60; 60'; 60''; 160) comportent, dans leurs zones s'appliquant contre la nappe filtrante (58; 58'; 58''; 158), une section droite qui a une forme de crochet arrondi et ouvert vers l'intérieur du châssis.

7. Elément filtrant selon la revendication 5 ou 6, caractérisé en ce que l'axe de pivotement (62; 62'; 62'') des rails de fixation (60; 60'; 60''; 160) est espacé transversalement de la membrure de châssis correspondante (42; 42'; 42''; 142) d'une distance telle que le centre de gravité du rail de fixation, disposé sur chant et s'appliquant contre la membrure de châssis associée, soit situé — en vue en plan — entre l'axe de pivotement et la membrure de châssis.

8. Elément filtrant selon une ou plusieurs des revendications 2 à 7, caractérisé en ce que la nappe filtrante (58; 58'; 58''; 158) est pincée entre les barres de serrage (52; 52'; 52''; 152) et les rails de fixation, (60; 60'; 60''; 160).

9. Elément filtrant selon une ou plusieurs des revendications précédentes, caractérisé en ce que les rails de fixation (160) sont dimensionnés et leurs axes de pivotement (62) sont disposés de telle sorte que les membrures de châssis (142) dépassent supérieurement des rails de fixation placés sur chant et forment en haut une surface de passage (142) pour marcher sur le châssis (40).

10. Elément filtrant selon une ou plusieurs des revendications précédentes, caractérisé en ce que la surface (163), dirigée vers l'intérieur du châssis, du rail de fixation (160) disposé sur chant est inclinée vers le bas et vers l'intérieur.

**Claims**

1. Filter element (20A—20G) for a filter ceiling (20) of a booth (10) of a paint spraying plant, comprising a rectangular metallic sectional frame (40; 40'; 40''), the frame members (42; 42'; 42''; 142) thereof defining a through opening and comprising approximately horizontal support flanges (42b; 42b'; 42b''; 142b) projecting into the interior of the frame, a rectangular grating (50; 50'; 50''; 150) resting on said flanges and bearing a filter mat (58; 58'; 58''; 158) extending in the same manner as the grating over the through opening, said filter mat being held down and clamped in the frame by clamping bars (60; 60'; 60''; 160) mounted on said frame members for pivoting movement about horizontal axes (62; 62'; 62'') and adapted to be pivoted downwards onto the filter mat, characterized in that said frame members (42; 42'; 42''; 142) are formed from extruded sectional bars (42a, 42b; 42a', 42b'; 42a'', 42b''; 142a, 142b) made of aluminium or another light metal alloy and comprising recesses (42d; 42d'; 42d'') for accommodating threaded holding members (54; 54'; 54''; 154), and that clamping members (52; 52'; 52''; 152) held down by said holding members are provided for clamping said grating (50; 50'; 50''; 150) between said clamping members and said flanges (42b; 42b'; 42b''; 142b).

2. Filter element as defined in claim 1, characterized in that said clamping members are designed as clamping strips (52; 52'; 52''; 152) held down by said holding members (54; 54'; 54''; 154) and extending along said frame members (42; 42'; 42''; 142), said strips covering the edges (50a; 50a'; 50a'') of said grating (50; 50'; 50''; 150).

3. Filter element as defined in claims 1 or 2, characterized in that said holding members are, in particular, self-tapping screws (54; 54'; 54''; 154).

4. Filter element as defined in one or more of claims 1 to 3, characterized in that each frame member (42; 42'; 42''; 142) includes an elongated groove (42d; 42d'; 42d'') formed during extrusion, said grooves forming the recesses for said holding members (54; 54'; 54''; 154).

5. Filter element as defined in one or more of claims 1 to 4, characterized in that each frame member (42; 42'; 42''; 142) includes an elongated groove (42g; 42g'; 42g'') formed during extrusion, said grooves widening towards the bases thereof for holding retaining elements (66; 66'; 66'') to which carrier members (64; 64'; 64'') for said clamping bars (60; 60'; 60''; 160) are attached, said clamping bars also being formed from extruded aluminium sectional bars and being articulated to said carrier members.

6. Filter element as defined in claim 5, characterized in that the cross section of said clamping bars (60; 60'; 60''; 160) in their region abutting on said filter mat (58; 58'; 58''; 158) resembles a rounded hook open towards the interior of the frame.

7. Filter element as defined in claims 5 or 6, characterized in that the pivot axis (62; 62'; 62'') of said clamping bars (60; 60'; 60''; 160) is spaced transversely from the respective frame member (42; 42'; 42''; 142) such that the center of gravity of the clamping bar pivoted upwards and abutting on the respective frame member lies, in the plan view, between the pivot axis and the frame member.

8. Filter element as defined in one or more of claims 2 to 7, characterized in that said filter mat (58; 58'; 58''; 158) is clamped between said clamping strips (52; 52'; 52''; 152) and said clamping bars (60; 60'; 60''; 160).

9. Filter element as defined in one or more of the preceding claims, characterized in that said clamping bars (160) are dimensioned and their pivot axes (62) arranged such that said frame members (142) project above the upwardly pivoted clamping bars and form at the top a walkway (142a) for walking on the frame (40).

10. Filter element as defined in one or more of the preceding claims, characterized in that the surface (163) of said upwardly pivoted clamping bar (160) facing the interior of the frame is inclined downwards and inwards.

# FIG. 1

FIG. 2

FIG. 3

EP 0 264 531 B1

# FIG. 4

# FIG. 5

## FIG. 6